# EUROPEAN PATENT SPECIFICATION

(11) **EP 0 394 209 B1**
(45) Date of publication and mention of the grant of the patent: **08.03.1995**
(21) Application number: 90850142.2
(22) Date of filing: 18.04.1990
(51) Int. Cl.: B24B 47/22, B24B 47/26, B23Q 1/25

(54) **Improvement in and relating to grinding machines**
Schleifmaschinen
Rectifieuses

(30) Priority: 19.04.1989 SE 8901421
(43) Date of publication of application: 24.10.1990
(73) Proprietor: UVA INTERNATIONAL AB, S-161 11 Bromma (SE)
(72) Inventor: Sjöberg, Hans, S-175 47 Järfälla (SE); Pawel, Kaniewski, S-127 32 Skärholmen (SE)
(74) Representative: Wennborg, Göte

(56) References cited:
- FR-A- 2 559 700
- GB-A- 2 153 270
- US-A- 4 221 080

## Description

The invention relates to a computer-controlled grinding machine, and particularly, but not exclusively, to a cylindrical grinding machine of the kind set forth in the preamble of Claim 1.

Such machines normally include two or more machine members supported respectively on upper and lower tables, these machine members possibly comprising measuring apparatus, grindstone sharpening devices and internal-grinding devices, in addition to a work head, steady rest or tailstock.

### Background Art

In known computer-controlled grinding machines of the kind intended here, the operator is able to effect relevant changes to the grinding process through the intermediary of a button bank provided on a machine console, these changes being occasioned by changes in workpiece geometry and workpiece grinding data. A number of the steps involved in the work of resetting the machine when grinding workpieces of varying dimensions, however, must be carried out manually. One example of this is the time-consuming precision work required to measure and adjust the relative distances between reference points on the machine members carried by the tables. These adjustments cannot be previously programmed, but are left to the responsibility and expertise of the operator concerned.

One requisite for modern manufacture to be profitable is that a smaller number of one particular product is worked at any one time. This tends to result in smaller batch numbers, which in turn leads to a greater number of resetting operations accompanied by greater demands on the operator and in higher costs for the non-programmable resetting work required.

It will therefore be seen that the possibility of automated, computer-controlled resetting of grinding machines which will enable the grinding cycle to be programmed in a computer herefore is highly desirable.

GB,A,2.153.270 (Schaudt) teaches a computer-controlled grinding machine of the kind disclosed in the preamble of claim 1 and which includes a facility for releasably locking a center-point tailstock. The tailstock is carried by a single table and there is a danger that dirt, cutting fluid, etc. will collect in the region of the locking devices and clamping surfaces.

US,A,3.803.770 (Abraham) teaches a grinding machine provided with an upper and a lower table, each of said tables being equipped with separate drive means.

US,A,4.221.080 (Favrot) teaches a twin-table machine comprising an upper and a lower table for a work spindle and a center-point tailstock respectively, these members being mounted for movement on one and the same slide. The relative movement between the tables for the purpose of clamping and releasing a workpiece is effected hydraulically. The tables are moved in unison with the aid of servo motors.

US,A,2.576.497 (Austin, et al) teaches a grinding machine construction in which the work head and the tailstock can be moved axially in relation to one another, with the aid of a mechanism intended therefor. There is no facility for common, simultaneous displacement of these two machine members, however.

US,A,2.356.839 (Flanders) also teaches a grinding machine construction in which the work head and tailstock can be moved relative to one another. The work head and tailstock spindle can also be locked together and are arranged to move axially in unison. The construction is relatively complicated, however, and is not intended to permit automated resetting of the machine.

DE,A,1.602.934 (Okuma Machinery Works) describes an engine lathe in which the axial position of a center-point tailstock can be reset automatically. This positional resetting of the tailstock spindle is controlled by a measuring device operative to detect the length of the workpiece concerned. The tailstock spindle and the work head do not move in unison. Instead, the lathe tool moves axially, as is normal with engine lathes.

However, none of the aforesaid head stock and tailstock arrangements known in connection with grinding machines and like machines enable computer-controlled resetting of the machine in the aforedescribed fashion, such that the entire grinding cycle can be previously programmed in computerized control apparatus.

### The Object of the Invention

Accordingly, one object of this invention is to provide an arrangement of the aforesaid kind by means of which adjustments can be made to the settings of a grinding machine in a reliable manner, with the aid of computerized control means, even when grinding workpieces of varying sizes, thereby enabling the entire grinding cycle or "machine-setup" to be preprogrammed.

Another object is to provide a grinding machine which will satisfy high accuracy requirements in conjunction with grinding operations.

### Summary of the Invention

These and other objects are realized by the grinding machine according to the invention, the features of which are set forth in Claim 1.

Because adjustments to the machine settings are effected with the aid of a bridge-like yoke, which is connected to the lower table and which carries workpiece-clamping means and/or some corresponding means in spaced relationship above the upper table, free relative movement is afforded between the upper and the lower table without hinderance from components or machine members carried by said lower table.

The fact that only one single drive means is used to move the tables in unison until the upper table is brought into contact with the table-engagement device and gripped and held by said device, simplifies the machine drive system and also improves the accuracy with which the tables can be positioned relative to one another. The position taken by the upper table when gripped and held by the table-engagement device provides an accurately defined reference point from which continued movement of the lower table to its selected reference position can be determined with great precision.

It is unnecessary to determine the relative positions of the tables in particular, since the computer operative to control table movements constantly has access to data representative of the positions of different relevant reference points. This particular advantage leads to the possibility afforded by the invention of also automating and computer-controlling the actual resetting operation itself, i.e. so as to enable the entire grinding cycle to be programmed and automated.

In practice, the operator need only select from the alternatives available on the computer button-bank that alternative or those alternatives which corresponds or correspond to the workpiece concerned, whereupon the entire working operation, including adjustments to machine alignment settings when grinding workpieces of varying dimensions takes place automatically and is computer-controlled in accordance with the program selected.

Because the upper and lower tables, whilst being locked together, move in unison to a reference point of the kind stated, for instance to a terminal position in which the direction of table movement is reversed, it is possible to determine the positional settings of the machine members in a positive manner with the accuracy presumed in accordance with the invention. The upper and lower tables move away from this predetermined position in unison without being mechanically locked in engagement with one another and being joined solely as a result of mutual frictional engagement, since the upper table rests on the lower table. This simultaneous movement continues until the upper table is engaged by the table-engagement device. It is possible, in this way, to determine clearly and unambiguously an upper-table reference point, while movement of the lower table in relation to this reference point is determined to precise values in a corresponding manner. When the lower table has reached a predetermined relative position, the tables are again connected mechanically by means of the locking device. It will be seen that the use of one single drive means provides the high degree of accuracy desired in the movement pattern and also facilitates the possibility of programming and computer-controlling adjustments to the settings of the grinding machine.

One important further member of the inventive grinding machine is the releasable locking device by means of which the upper and lower tables are held together. Thus, it is important that the elements from which the locking device is formed will not give rise to oblique or asymetric engagement forces liable to cause one table to move laterally relative to the other and therewith impair grinding.

It is also important that the locking elements of said locking device are disposed symmetrically and, as stated in Claim 2, preferably engage an elongated element, e.g. a straight edge, mounted on the other of said tables, on mutually opposite sides of the straight edge.

This elongated element, e.g. the straight edge, shall as stated in Claim 3 preferably be held against axial movement, but guided for movement in the transverse direction of the table carrying said element. These transverse movements are, of course, very small, but impaired grinding can be avoided when such small transverse movements are permitted.

Further advantage characteristic features of the locking device are disclosed in Claims 4 and 5. Locking shoulders of the kind stated and carried on excentric shafts make possible accurate locking engagement in any relative position and also enable the locking device to be released immediately and quickly when so desired.

Further possible features of the grinding machine will be evident from the following description of a preferred embodiment of the invention illustrated in the accompanying drawings, in which
Figure 1 is a perspective view of a cylindrical grinding machine and an associated cabinet which houses computer and control equipment;
Figures 2-4 illustrate schematically and principally and in perspective different relative positions between the upper and lower tables when making computer-controlled changes to the settings of the grinding machine;
Figure 5 illustrates part of a locking device from beneath, said locking device being operative to join the upper and lower tables together with the aid of two symmetrical locking shoulders in locking engagement with a straight edge;
Figure 6 is a view similar to Figure 5, but with the locking shoulders released from their engagement with the straight edge;
Figure 7 is a partly cut-away front view which illustrates the grinding-machine bed, the lower table, an associated bridge-like yoke, the upper table, and the locking mechanism which joins the two tables together; and
Figure 8 is a partly cut-away side view of the locking mechanism and associated locking-mechanism drive means.

### Description of Preferred Embodiments

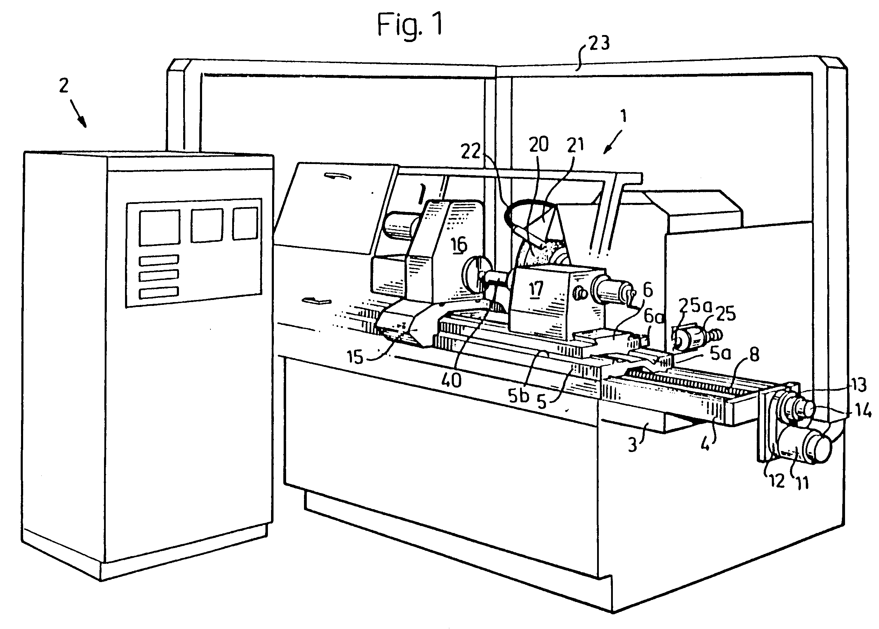

Figure 1 illustrates a cylindrical grinding machine 1 and a cabinet 2 which houses computer and control equipment.

The machine frame has a bed 3 and a bed slide 4 of stable construction.

A lower table or work platen 5 is mounted in V-guides and plain guides for axial movement on the bed-slide 4.

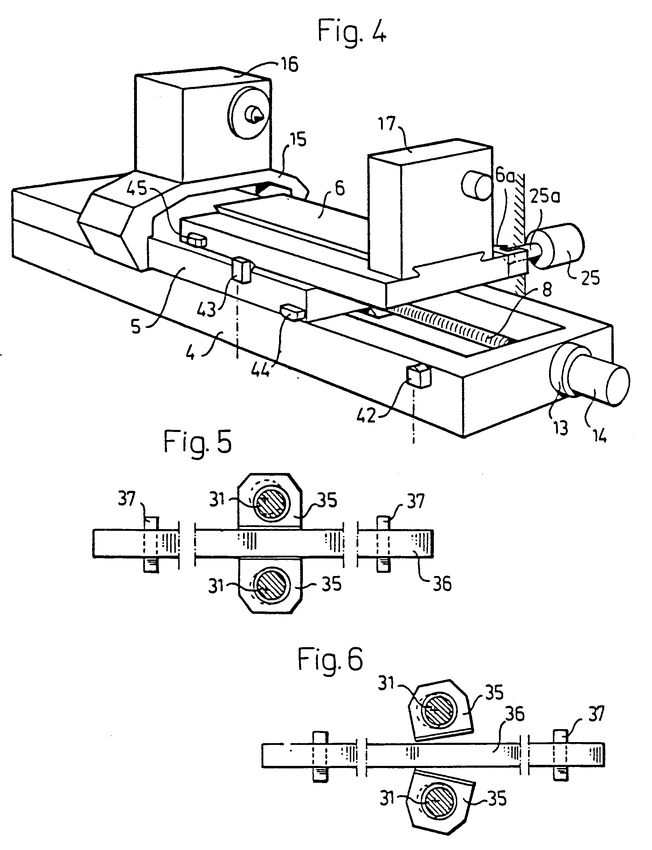

The lower table 5 is provided in turn with V-guides 5a and plain guides 5b for guiding an upper table 6. The upper table 6 is joined mechanically to the lower table 5 by means of a specially designed locking device, hereinafter described with reference to Figures 5-8.

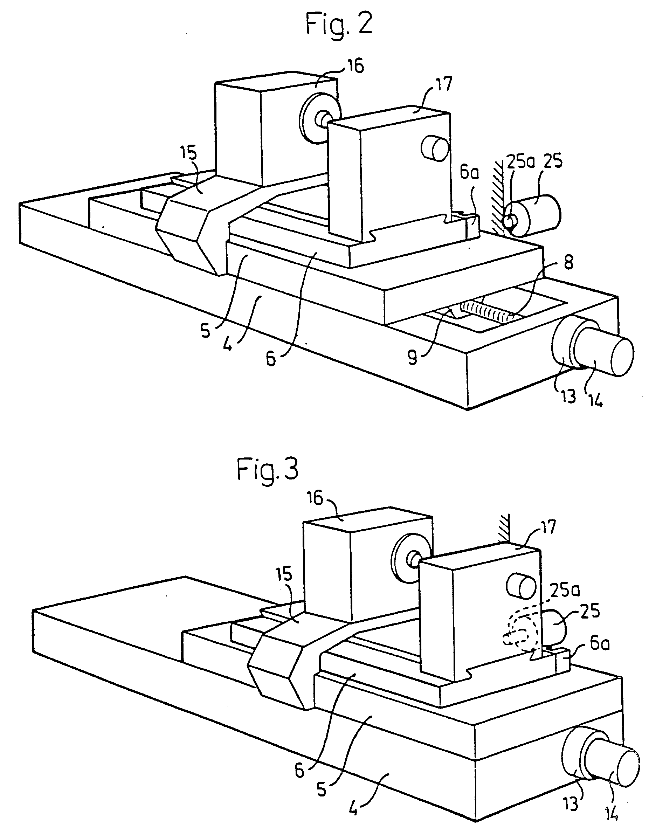

The lower table is driven by means of a drive arrangement comprising a so-called ball screw 8 which engages in a nut 9 (shown for instance in Figure 2) mounted on the upper table.

The ball screw 8 is driven by a motor 11 with the aid of a toothed belt 12 passing around a spocket wheel 13. A pulse emitter 14 connected to the screw 8 generates pulses in response to rotation of the screw. These pulses are sent to an arithmetic or counter mechanism in the control system, so that the exact position of the lower table, and therewith also the upper table, can be determined at any given moment to an accuracy of 1/1000 mm.

The drive motor 11 is a servo motor, which enables the table to be positioned quickly and exactly, by manually pressing the appropriate buttons and by means of a program for automatic grinding cycles in multi-diameter and length grinding operations. The illustrated grinding machine includes a work head 16 which is carried by the lower table 5 through the intermediary of a bridging yoke 15 which extends to a point above the upper table 6. The upper table 6 carries a tailstock 17 provided either with a spindle or with a center-point.

The work head is adjusted to those grinding operations for which the machine is intended. In its simplest form, the work head has a rigid, non-rotating spindle. This type of spindle provides the best stability for grinding operations between the work head and tailstock.

The upper table 6 carries a tailstock 17, which can be readily moved subsequent to backing-off clamping screws (not shown).

The machine illustrated in Figure 1 may be provided with other types of stocks, measuring equipment, grinding-wheel-sharpening means or internal-grinding means, in addition to the illustrated work head and tailstock.

In the Figure 1 illustration, the grinding wheel is referenced 20, a grinding wheel guard is referenced 21 and a nozzle for delivering cutting fluid is referenced 22. A channel system for electric cables extending between the cabinet 2 and the grinding machine 1 is referenced 23.

Also illustrated in Figure 1 is a table-engagement device 25 having an engagement member 25a which is operative to engage a recess 6a provided in the upper table 6 for this purpose. The engagement device 25 is biased by a spring towards its position of engagement and is so configured as to accurately determine the position of the upper table. Movement towards and away from the release position is effected under the influence of a pressure fluid.

The engagement means 25a will hold the upper table in a predetermined position, provided that the locking device hereinafter described and acting between the two tables is released.

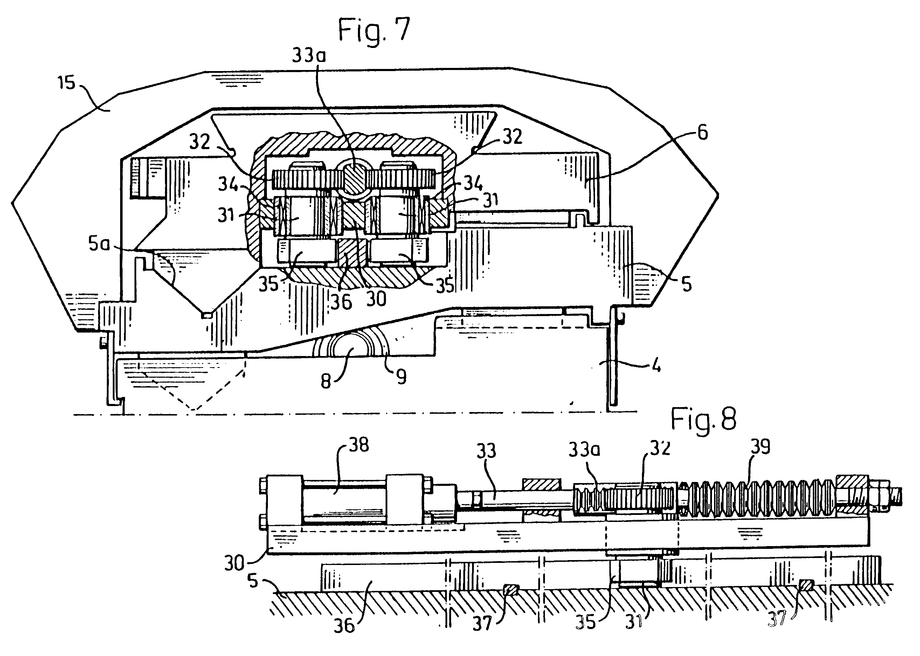

The configuration of the locking device is shown in Figures 7 and 8. Provided in the upper table 6 is a plate 30 which carries journals 34 for two excentric shafts 31. The upper part of each of the shafts 31 engages, via a respective gear wheel 32, a rack-part 33a of a piston rod 33.

Each of the excentric shafts 31 carries on its lower end a locking shoulder 35. These locking shoulders engage an elongated straight edge 36 connected to the lower table 5 from mutually opposite sides of said straight edge.

It is essential that no transverse or obliquely acting forces capable of displacing one of the tables 5, 6 laterally in relation to the other can occur, and consequently the locking shoulders 35 engage mutually opposite sides of the straight edge 36 symmetrically.

The straight edge 36 is rigid in its axial direction and is able to perform given lateral movements, in order to eliminate the risk of the effect of transverse forces of the aforesaid kind.

As will be seen from Figure 8, the straight edge 36 is guided on guide keys 37 disposed between the lower table 5 and the straight edge.

Displacement of the piston rod 33 for the purpose of releasing the locking shoulders 35 is effected by means of a piston-cylinder device 38, which moves the piston rod towards a pack of cup springs 39. The arrangement is such that the spring pack 39 will always return the locking shoulders 35 into locking engagement, should the drive means 38 malfunction.

Co-action of the locking shoulders 35 with the straight edge 36 is illustrated in Figures 5 and 6, of which Figure 5 illustrates the locking shoulders in their positions of engagement with the straight edge 36, whereas Figure 6 illustrates the locking shoulders in their released positions. The locking shoulders achieve accurate and reliable engagement with the straight edge.

Figure 1 illustrates a workpiece 40 clamped between the work head 16 and a center-point tailstock 17. The workpiece is machined by the grinding wheel 20.

The workpiece 40 comprises a shaft which exhibits several diameters. Small numbers of such shafts of varying dimensions are to be ground in the machine, which necessitates a new setup, i.e. relative movement between the work head 16 and the tailstock 17 to a new working position, in addition to removing a workpiece and inserting a new workpiece.

This adjustment to the machine settings can be achieved by means of the computer and control system of the machine, when practicing the inventive method.

Figures 2-4 illustrate the general procedure carried-out when effecting adjustments to machine settings.

Thus, as illustrated in Figure 2, the lower table 5 and the upper table 6 are locked together and move to the right in the Figure, until reaching a terminal position.

In this terminal position, illustrated in Figure 3, the locking shoulders 35 are released from the straight edge 36 in the aforedescribed manner, by activation of the piston-cylinder device 38. The engagement member 25a on the engagement device 25 moves into its position of engagement at the same time.

The ball screw 8 then begins to rotate in an opposite direction, so as to move the lower table to the left. The upper table 6 moves together with the lower table - despite the fact that the locking device has been released - as a result of the friction acting between the tables.

As illustrated in Figure 4, the engagement member 25a engages and holds the upper table 6. The lower table 5 continues to move to the left. The lower table then reaches a terminal position in which the direction of table-movement is reversed. The table continues to move to the right through a given distance, until the lower table is in a position in which the work head 16 and the tailstock 17 are located at a predetermined distance apart.

The lower table 5 is stopped in this position, and the locking device is returned to its locking position, whereas the engagement member 25a moves to its released position, so that the upper table can pass the engagement means without coming into engagement therewith.

The lower and upper tables have therewith been set to desired relative positions.

Figure 4 illustrates two position indicators 42 and 43 which, in co-action with blocks or corresponding projections 44 and 45 respectively produce 0-position signals representative of the relative movement between the bed 4 and the lower table 5 and between the lower table 5 and the upper table 6 respectively. The machine control equipment is then able to position the upper table 6 in relation to the lower table 5 very accurately with the aid of these 0-position signals and the pulse emitter 14.

It is not necessary, however, to release the locking device in said terminal position. It is, however, necessary to release the locking device at the latest when the engagement member 25a comes into engagement with the upper table.

Subsequent to releasing the locking device, the lower table may be optionally moved immediately to its predetermined, new position, i.e. without first passing a terminal position when the direction of movement is reversed. Passage of the lower table through terminal positions of the kind stated, however, will afford certain advantages which facilitate the guidance of table movement via the computer-control arrangement.

The fact that only one single drive means, in the form of the ball screw 8, is used for moving both of said tables contributes to the high degree of accuracy achieved by the control system. As before mentioned, the tables may move in unison, subsequent to releasing the locking device between said tables, as a result of the friction acting there between, until the engagement member engages the upper table.

It will be understood that other types of locking device and engagement means than those illustrated can be used. It is essential, however, that the devices and means used will not create in the system resultant forces which have a negative effect on the accuracy of the movements.

## Claims

1. A computer-controlled grinding machine, particularly a cylindrical grinding machine, comprising
a) a bed (3, 4);
b) a table (5) which is driven on the bed by a computer-controlled drive means, e.g. a motor-driven ball screw (8) co-acting with a nut means (9);
c) a first means for securing a work-piece (40) to the machine, e.g. a work head, steady-rest or tailstock (16), said means being fixedly secured to said table (5) and a second such means (17) which is movable both together with and relative to said table (5) to positions at various distances from said first means (16);
d) an engagement means (25a) which is movable between a released position and an engagement position in which said second means (17) is held firmly relative to said bed and prevented from moving when said table (5) is displaced;
**characterized** in that
e) a bridging yoke (15) is connected to said table (5) to support said first securing means (16);
f) an elongate second upper table (6) is guided on said first or lower table (5) for movement relative to said lower table when not connected thereto, said upper table (6) carrying said second securing means (17), so that it is movable relative to said first securing means (16) to said positions at various distances therefrom;
g) said bridging yoke (15) extends over the upper table (6) in spaced relationship therewith;
h) a locking means (35) is adapted for releasably locking said upper table (6) to said lower table (5) so that said upper and lower tables (6; 5) will move in unison;
i) a drive means (38, 33) is operative to release said locking means and is intended to be activated at the latest when said engagement means (25a) is in engagement with the upper table (6) so as to permit linear relative movement to predetermined positions between reference points on the driven lower table (5) and the upper table (6), said upper table lacking separate drive means; and in that
j) the locking means comprises members (35) which are disposed symmetrically on one of the tables and which are movable under the action of the drive means (38, 33) and function to engage an elongated element (36) on the other of said tables (5; 6) on mutually opposing sides of said element.

2. A grinding machine according to Claim 1, **characterized** in that the elongated element has the form of a straight edge (36) which is axially rigid in relation to the supporting table (5) but guided for movement transversely to the longitudinal axis of said table.

3. A grinding machine according to Claim 1 or 2, **characterized** in that the locking device or each locking device includes a shoulder (35) which is movably carried by an eccentric shaft (31) which extends at right angles to the direction of table movement, and in that each said shoulder is intended to engage one side of the elongated element, e.g. the straight edge (36), mounted on one of said tables.

4. A grinding machine according to Claim 3, **characterized** in that the eccentric shaft, or each said eccentric shaft (31), carries a gear wheel (32) in engagement with a rack (33a) which is connected to a drive means, e.g. a hydraulically or pneumatically-operated drive means, such as a piston rod (33) for rectilinear movement.

5. A grinding machine according to any one of Claims 1-4, **characterized** in that the drive means is configured for movement towards said release position against the action of spring means (39), said spring means functioning to return the locking device or locking devices into locking engagement upon deactivation of said drive means.

## Patentansprüche

1. Rechnergesteuerte Schleifmaschine, insbesondere Zylinderschleifmaschine, die umfasst
a) ein Bett (3, 4),
b) einen Tisch (5), der auf dem Bett von einem rechnergesteuerten Antriebsorgan, z.B. von einer mit Motor angetriebenen, mit einem Mutterorgan (9) zusammenwirkenden Kugelschraube (8) angetrieben wird,
c) eine erste Anordnung zur Befestigung eines Werkstückes (40) auf der Maschine, z.B. einem Spindelstock, einem Setz- oder Reitstock (16), wobei die Anordnung auf dem Tisch (5) befestigt ist und eine zweite solche Anordnung (17) sowohl zusammen mit und relativ zum Tisch (5) zu Positionen mit verschiedenen Abständen von der ersten Anordnung (16) verschiebbar ist,
d) eine Eingriffsvorrichtung (25a) die verschiebbar ist zwischen einer Freilage und einer Eingrifflage, in welcher die zweite Anordnung (17) solide relativ zum Bett bei Verschiebung des Tisches (5) festgehalten wird,
**dadurch gekennzeichnet**, dass
e) ein überbrückendes Joch (15) mit dem Tisch (5) verbunden ist um die erste Befestigungsanordnung (16) zu stützen,
f) ein langgestreckter zweiter Obertisch (6) auf dem ersten Tisch oder Untertisch (5) gesteuert ist zur relativen Verschiebung zum Untertisch, wobei der Obertisch (6) die zweiten Befestigungsanordnungen (17) trägt, sodass er zur ersten Befestigungsanordnung (16) zu den erwähnten Positionen mit verschiedenen Abständen davon verschiebbar wird,
g) das Brückenjoch (15) sich über den Obertisch (6) erstreckt im Abstand von diesem,
h) eine Riegelvorrichtung (35) vorgesehen ist um den Obertisch (6) aufschliessbar am Untertisch (5) zu verriegeln zur gemeinsamen Verschiebung des Ober- und Untertisches (5, 6),
i) eine Antriebsvorrichtung (38, 33) wirksam ist zur Aufschliessung der Riegelvorrichtung und spätestens bei Eingriff der Eingriffsvorrichtung (25a) in den Obertisch (6) aktiviert werden soll um eine Relativbewegung zur vorausbestimmten Positionen zwischen Referenzpunkten auf dem angetriebenen Untertisch (5) und dem Obertisch (6) zu ermöglichen, wobei der Obertisch gesonderte Antriebsmittel entbehrt, und dadurch dass
j) die Riegelvorrichtung Teile (35) umfasst, die symmetrisch auf einem der Tische angebracht sind und unter der Wirkung der Antriebsvorrichtung (38, 33) verschiebbar sind und vorgesehen sind mit einem langgestreckten Element (36) auf dem anderen Tisch (5, 6) auf jeweils gegenüberliegenden Seiten dieses Elementes zum Eingriff zu kommen.

2. Schleifmaschine gemäss Patentanspruch 1, **dadurch gekennzeichnet**, dass das langgestreckte Element die Gestalt eine geraden Kante (36) hat, die achsial steif relativ zum Tisch (5) ist, jedoch zu einer Verschiebung quer zur Tischlängsachse gesteuert wird.

3. Schleifmaschine gemäss Patentanspruch 1 oder 2, **dadurch gekennzeichnet**, dass die Riegelvorrichtung oder jede Riegelvorrichtung eine Schulter (35) enthält, die beweglich von einer Exzenterwelle (31) getragen wird, die sich rechtwinklig zur Tischverschiebung erstreckt, und dadurch dass jede dieser Schultern vorgesehen ist mit einer Seite des langgestreckten Elementes zum Eingriff zu kommen, z.B. der geraden, auf einem der Tische aufgesetzten Kante (36).

4. Schleifmaschine gemäss Patentanspruch 3, **dadurch gekennzeichnet**, dass die Exzenterwelle oder jede der Exzenterwellen (31) ein Zahnrad (32) trägt im Eingriff mit einer mit einer Antriebsvorrichtung verbundenen Zahnstange (33a), z.B. eine hydraulisch oder pneumatisch betriebene Antriebsvorrichtung, wie eine Kolbenstange (33) für eine geradlinige Verschiebung.

5. Schleifmaschine gemäss irgendeinem der Patentansprüche 1-4, **dadurch gekennzeichnet**, dass die Antriebsvorrichtung für eine Verschiebung in Richtung zur Freilage entgegen der Wirkung von Federelementen (39) dimensioniert ist, wobei diese Federelemente vorgesehen sind die Riegelvorrichtung oder -vorrichtungen bei Abschaltung dieser Antriebsvorrichtung in die Verriegelung zurück zu führen.

## Revendications

1. Rectifieuse commandée par ordinateur, notamment rectifieuse cylindrique, comprenant :
a) un bâti (3,4);
b) une table (5) qui est entraînée sur le bâti par un moyen d'entraînement commandé par ordinateur, par exemple une vis à billes (8) entraînée par un moteur et coopérant avec un moyen formant écrou (9);
c) un premier moyen pour fixer une pièce à usiner (40) à la machine, par exemple une tête de travail, une lunette fixe ou une contre-poupée (16), ledit moyen étant fixé à demeure à ladite table (5), et un second moyen de ce type (17) qui peut être déplacé à la fois avec ladite table (5) et par rapport à cette dernière, pour venir dans des positions situées à des distances différentes dudit premier moyen (16);
d) un moyen d'engagement (25a), qui est déplaçable entre une position libérée et une position d'engagement dans laquelle ledit second moyen (17) est maintenu fermement par rapport audit bâti et ne peut pas de déplacer lorsque ladite table (5) est déplacée; caractérisée en ce que
e) un étrier formant pont (15) est relié à ladite table (5) pour supporter ledit premier moyen de fixation (16);
f) une seconde table supérieure allongée (6) est guidée sur ladite première table, ou table inférieure (5), pour se déplacer par rapport à ladite table inférieure lorsqu'elle n'y est pas raccordée, ladite table supérieure (6) portant ledit second moyen de fixation (17) de telle sorte qu'il est déplacable par rapport audit premier moyen de fixation (16) pour venir dans lesdites positions à différentes distances de ce premier moyen de fixation;
g) ledit étrier formant pont (15) s'étend au-dessus de la table supérieure (6) en en étant espacé;
h) un moyen de blocage (35) est adapté pour bloquer, d'une manière libérable, ladite table supérieure (6) sur ladite table inférieure (5) de sorte que lesdites tables supérieure et inférieure (5;6) se déplacent de conserve;
i) un moyen d'entraînement (38,33) peut agir de manière à libérer ledit moyen de blocage et est destiné à être activé au plus tard lorsque ledit moyen d'engagement (25a) s'engage contre ladite table supérieure (6) de manière à permettre un déplacement linéaire relatif jusqu'à des positions prédéterminées entre des points de référence sur la table inférieure entraînée (5) et sur la table supérieure (6), ladite table supérieure ne comportant aucun moyen séparé d'entraînement; et en ce que
j) le moyen de blocage comprend des éléments (35) qui sont disposés symétriquement sur l'une des tables et qui sont déplaçables sous l'action du moyen d'entraînement (38,33) qui agit de manière à venir en contact avec un élément allongé (36) situé sur l'autre desdites tables (5;6) sur des côtés réciproquement opposés dudit élément.

2. Rectifieuse selon la revendication 1, caractérisée en ce que l'élément allongé possède la forme d'un bord rectiligne (36) qui est solidaire axialement de la table de support (5), mais est guidé de manière à se déplacer transversalement par rapport à l'axe longitudinal de ladite table.

3. Rectifieuse selon la revendication 1 ou 2, caractérisée en ce que le dispositif de blocage ou chaque dispositif de blocage comprend un épaulement (35) qui est porté, de manière à être déplaçable, par un arbre excentré (31) qui est perpendiculaire à la direction de déplacement de la table, et en ce que chacun desdits épaulements est destiné à s'engager contre une face de l'élément allongé, par exemple le bord rectiligne (36), monté sur l'une desdites tables.

4. Rectifieuse selon la revendication 3, caractérisée en ce que l'arbre excentré ou chacun desdits arbres excentrés (31) porte un pignon (32) engrenant avec une crémaillère (33) qui est raccordée à un moyen d'entraînement, par exemple un moyen d'entraînement à commande hydraulique ou pneumatique, comme par exemple une tige de piston (33) pour un déplacement rectiligne.

5. Rectifieuse selon l'une quelconque des revendications 1-4, caractérisée en ce que le moyen d'entraînement est agencé de manière à se déplacer dans la direction de ladite position de libération à l'encontre de l'action d'un moyen formant ressort (39), ledit moyen formant ressort agissant de manière à ramener le dispositif de blocage ou les dispositifs de blocage dans un engagement de blocage lors de la désactivation dudit moyen d'entraînement.
